Europäisches Patentamt

European Patent Office

Office européen des brevets

(11) Publication number: **0 259 307 B1**

# EUROPEAN PATENT SPECIFICATION
## published in accordance with Art. 158(3) EPC

(45) Date of publication of patent specification: 28.08.91

(21) Application number: 86901641.0

(22) Date of filing: 12.02.86

(86) International application number:
PCT/US86/00328

(87) International publication number:
WO 87/04943 (27.08.87 87/19)

(51) Int. Cl.⁵: **B01D 1/14**, F26B 3/00,
F26B 5/00, G01N 1/18,
G01N 1/22, B01L 11/00

(54) CONTROL OF LABORATORY EVAPORATION.

(43) Date of publication of application:
16.03.88 Bulletin 88/11

(45) Publication of the grant of the patent:
28.08.91 Bulletin 91/35

(84) Designated Contracting States:
DE FR GB

(56) References cited:
FR-A- 1 443 423
US-A- 3 398 935
US-A- 3 847 200
US-A- 4 267 131
US-A- 4 562 778
US-A- 2 933 823
US-A- 3 588 053
US-A- 3 876 490
US-A- 4 465 554

(73) Proprietor: ZYMARK CORPORATION
Zymark Center
Hopkinton Masschusetts 01748(US)

(72) Inventor: FRISWELL, David, R.
200 Winter Street
Holliston, MA 01746(US)

(74) Representative: Warren, Anthony Robert et al
BARON & WARREN, 18 South End, Kensington
London W8 5BU(GB)

## Description

This invention relates to (a) novel processes for controlling the evaporating of liquid from a chemical sample, with drying gas, or like processes, and (b) apparatus useful in such processes.

It is often desirable to transfer a solute from one solvent system to another solvent system. For example, this procedure is used frequently in liquid chromatography where a first solution, perhaps a liquid fraction obtained from one chromatographic procedure, can be more specifically analyzed by use of a different solvent to carry the dissolved components of the first solution. In the past, it has been common to place the first solution into a tube and, using a gas sparge tube, or cannula, contact the solution with sufficient drying gas to remove the unwanted liquid.

Sometimes, too, a sensitive solid product is damaged by continuing to pass drying gas into the apparatus beyond the optimum drying point. Moreover, it is sometimes desirable to leave the solid contents in a somewhat pasty or damp condition. At present, to avoid damage of such samples, it is convenient to dry stepwise or to slow down the drying rate to a fraction of the possible drying rate, thereby reducing the chance that an operator will be inattentive for a period long enough to allow the samples to be dried excessively.

It is an object of the invention to provide a novel process and apparatus enabling laboratory evaporation procedures to be made more efficient by an improvement in the means by which the appropriate dryness of a sample, or any appropriate end-point for an evaporation process, is achieved.

From one aspect of the present invention, there is provided a process for recovering solids from liquids as defined in claim 1.

From another aspect, the invention provides apparatus for isolating solids from a liquid by evaporation as defined in claim 5.

A sample-producing system embodying the invention comprises a tubular receptacle for liquid being processed and gas feed means to supply carrier gas into the receptacle such that the gas follows a path downwardly along the receptacle wall until it reaches the material to be treated. This procedure serves to leave a relatively free central path in the receptacle through which the process gas, now laden with any material being evaporated, may proceed upwardly through the central portion of the volume enclosed by the walls of the receptacle. Because the gas leaving the receptacle is not much diluted by mixing with the incoming gas, it is more sensitive to analysis by any number of procedures. For example, it may be thermally evaluated for the end point of an evaporation step. It is important to understand that this end point can be characterized by an absolute temperature, a temperature differential, or a rate in change of temperature. The incoming gas port is sufficiently remote from the material being dried that it does not cause any significant mixing but merely provides a stream of gas moving across the material to be dried.

Thus one particularly advantageous analytical procedure, facilitated by the construction and operation of that part of the invention described above, is the use of a collection conduit for removing the outgoing gases and mounting, on it or in it, a thermistor for sensing the temperature of the offgas. Such a device, on sensing a rise in temperature of the offgas, would report the completion, or near completion, of the drying to a control means which would respond with an appropriate action. For example, it could shut off the drying gas, alarm an operator, or the like.

Another important advantage of the invention is that the advantageous helical flow pattern - characterized by a rapid flow of gas across the surface of the liquid being evaporated - remains even over very substantial changes in the height of the liquid being processed within the tubular receptacle.

In one advantageous mode of the invention, the receptacle will be a test tube and will be equipped with a conduit for supplying the incoming gas. The outlet port of the gas-supply conduit will be so arranged that it will provide a generally helical flow path for the gas along the interior wall of the tube until it reaches the material being treated. Thereupon, the outgoing gas will rise and exit through a central outlet port of an outlet conduit which may be conveniently connected to an exhaust manifold.

In practice, it is contemplated that a number of such evaporating units will share a single laboratory station. Each unit can, typically, consist of a drying tube, a closure means for the drying tube which would also form means to hold and position the inlet and outlet gas conduits. Each drying tube would be held in a thermostatically controlled stand and the closure members with the inlet and outlet conduits could be conveniently positioned on the stand also.

While the subject invention will probably be most useful in evaporative processes wherein a solid residue is left behind, it should be noted that it has a number of other uses. It could be used very effectively to sublimate solids from a mixture being treated. Such sublimation processes could use incoming gases of appropriate temperatures. It also is used very effectively to evaporate films of the top layer of non-miscible liquids in the tube. Finally, it could be used as a short-term gas-purge device, for example where nitrogen or argon might be used over a short period of time to preserve samples of a chemical before subsequent processing. In each case the assurance that the inlet flow would be effectively conducted to the material being treated would be an important advantage.

However, it is also useful to sense the temperature or rate of temperature change at the site of evaporation near the bottom of the drying tube. This can be accomplished by the use of sensors inside the tube, buried in the tube wall, or outside the tube. Moreover, the temperature could be sensed by the temperature-sensitive robot hands constructed according to the principles described in the article "A Simple Thermal Touch Sensor" appearing in Vol. 6, No. 10 of Robotics Age magazine R.A. Russell, which article is herein incorporated by reference.

It also should be noted that the apparatus, as illustrated below, is particularly useful in conjunction with robot means. A robot arm can be used to pick up a conduit-bearing closure from a storage shelf and place it into the test tube. Moreover, as indicated above, the temperature-sensing element may be associated directly with a robot hand which carries said tube.

The process and apparatus embodying the invention enable dried samples of predictable rewettability or dryness, for example dried samples of excellent uniformity, to be provided rapidly, enable the monitoring of the quality of solids being prepared by the evaporative process, and enable the incoming drying gas to be segregated from the gaseous effluent leaving an evaporator, thereby facilitating disposal of the effluent.

The process and apparatus may also be used for monitoring the quality of off-gases from a gas-purged vessel.

A preferred embodiment of the invention will now be described with reference to the accompanying drawings, in which:-

Figure 1 is a perspective view, somewhat schematic, of an apparatus embodying the invention.

Figure 2 is a view downwardly of an apparatus embodying the invention showing the position of a gas inlet conduit.

Figure 3 is a perspective view, somewhat schematic, of a station comprising a number of evaporating units, each comprising the apparatus described in Figure 1.

Figure 4 shows the location of a temperature-sensing means.

Figure 5 is a control circuit useful with the apparatus and process embodying the invention.

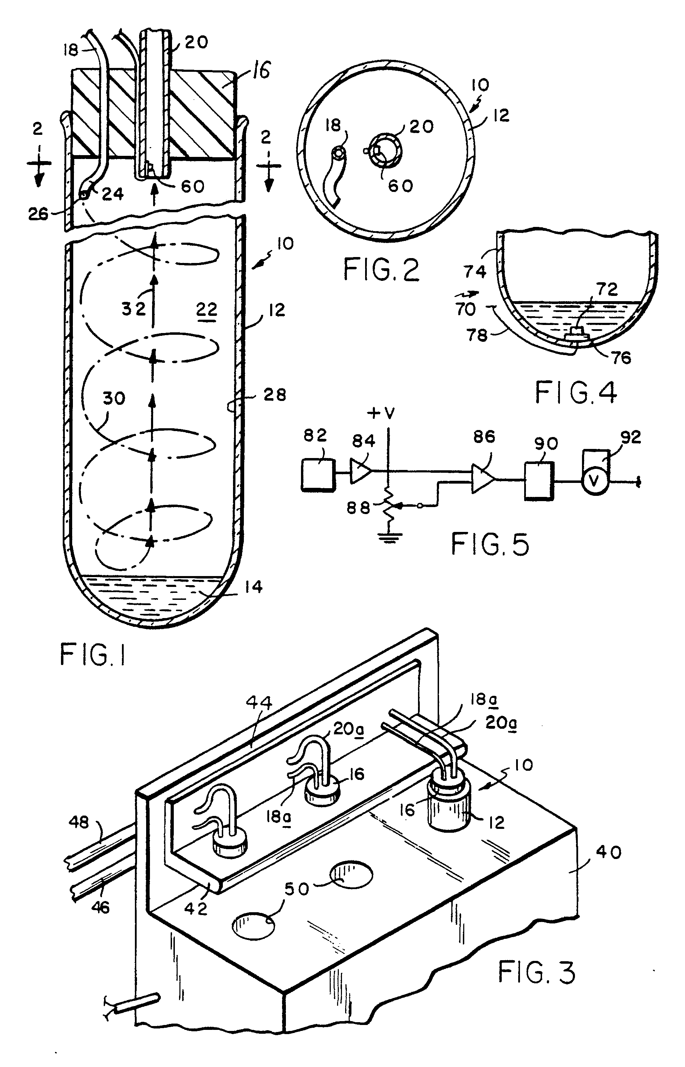

Referring to Figures 1 and 2, it is seen that the liquid-evaporating apparatus 10 comprises a test tube 12 forming a vessel or receptacle for receiving a quantity of liquid 14 which comprises a solute dissolved therein. Tube 12 is equipped with a closure 16 through which a gas inlet conduit 18 and a gas outlet conduit 20 pass into the head-space 22 within the tube 12 and above liquid 14.

Conduit 18, which is about 0.76mm (0.030 inches) in inside diameter, is arranged such that its terminal portion 24, and its discharge port 26 cause the gas to be discharged somewhat downwardly (preferably at an angle of from 10 to 50 angular degrees, but most advantageously at about 15 to 30 degrees) along the interior wall 28 of tube 12. As indicated schematically at 30, the gas flow from conduit 18 hugs the wall in a helical pattern until it reaches liquid 14 (or wet solid which gradually appears as its solvent is evaporated from the mass of liquid 14).

The motion of the inflowing gas induces a natural internal path for removal of moisture-carrying gas up the central portion of the test tube, as indicated at 32 of Figure 1. Thus, the incoming and outgoing gas are maintained in a very useful degree of segregation. The gas is carried past a thermistor 60 which forms means for sensing the temperature of the gas and reporting such temperature to circuitry which, in response to said temperature, stops or controls the flow of drying gas.

Figure 3 illustrates one convenient way to utilize the invention. Several evaporating units, each comprising an apparatus 10, are utilized in conjunction with a central processing station 40. The closures 16 are kept on a shelf 42 with the necessary flexible conduits 18a and 20a extending, retracted, behind the facade 44 to manifolds 46 and 48 respectively. The test tube - holding receptors 50 in station 40 are desirably thermostatically electrically controlled in a "dry" heat bath, e.g. an aluminum block.

Figure 4 illustrates an apparatus 70 in which a temperature sensor 72 is positioned in a test tube 74 proximate to, i.e. immersed in, the sample being treated. The sensor 72 sits on an insulating gasket 76 and is operably connected to a control sensing circuit by electrical conduit 78. This is often preferred when more sensitive temperature measurements, e.g. detection of a mere slowing of the rate of evaporation, is desirable.

Figure 5 illustrates a schematic diagram of a simple control circuit 80 useful with the invention. Circuit 80 comprising a thermal sensor 82 having a voltage output proportional to the temperature of the material being dried. The signal is buffered, for example through an amplifier/filter system 84, and then the resulting signal is compared in a comparator 86 against a set point, e.g. as with variable resistor 88. The resulting signal is usually further processed according to the needs of a particular system through an amplification system, and the output signal is used to control a drying-gas cooling supply, for example by operation of a solenoid valve as indicated at 92, or to actuate an alarm to alert an operator, or to vary the rate of drying gas, etc.

Such sensitive measurements make it easy to detect and stop a drying action by cutting off the supply of drying gas when a solid residue is still wet and susceptible to easy redispersal and solvation. Also, it provides a means to assure sensitive biological products are not damaged by excessive drying.

## Claims

1. A process for recovering solids from a liquid by evaporating said liquid until said solids have been converted to a solid composition of a desired state of dryness, said process comprising the steps of:
   a) placing a liquid composition (14) containing said solids and said liquid in a tubular receptacle (12);
   b) causing drying gas to flow into said receptacle (12) through an inlet conduit (18) positioned proximate to the top of said tubular receptacle (12) and disposed to direct the flow of said drying gas in a helical path (30) along the interior wall (28) of said receptacle (12) and into intimate contact with said solution contained thereby as the liquid is being removed from said solution;
   c) then removing said drying gas through another conduit (20) disposed to draw said gas upwardly through the central region of said receptacle (12) thereby avoiding dilution of said outgoing gas by said incoming gas so as to maintain a significant temperature difference between incoming drying gas and outgoing gas during said evaporating process;
   d) sensing a change in rate of evaporation by thermally monitoring the temperature of said evaporation process; and
   e) decreasing the flow of drying gas in response to said sensed change in rate of evaporation, thereby obtaining said solid in said desired state.

2. A process as claimed in claim 1, wherein said temperature of said drying gas is sensed (60) as it is being removed from said receptacle and is used as a criterion for determining said desired state.

3. A process as claimed in claim 1 or 2, wherein said helical path (30) is initiated at an angle of from about 10 to 50 angular degrees downwardly from horizontal.

4. A process as claimed in claim 1, 2 or 3, wherein the temperature of the material being dried is sensed, at a position (72) proximate to said material, and used as a criterion of said desired state.

5. Apparatus for isolating solids from a liquid by evaporating said liquid, said apparatus comprising:
   a) a tubular receptacle (12) having a closure (16) only at a top opening thereof and forming means to hold a liquid composition (14) positioned to be dried to a suitably dry state near the bottom thereof;
   b) a first supply conduit (18) through said closure (16) and positioned near the top of said receptacle (12) and disposed for conveying drying gas into said receptacle (12) in a helical path (30) along the interior wall (28) of said receptacle and into contact with said composition (14) being dried;
   c) a second conduit (20) located in said closure (16) and disposed to remove said drying gas upwardly through the central region of said receptacle (12) after said gas has contacted said composition being dried;
   d) each said conduit (18 and 20) accessing said receptacle (12) at said opening and said conduits (18 and 20) together forming a means to avoid excessive dilution of incoming gas by gas being removed from said receptacle (12);
   e) a control circuit (80) forming means to sense a temperature condition of said evaporating liquid; and
   f) circuit means (82) to reduce or stop the flow of said drying gas in response to said temperature condition.

6. Apparatus as claimed in claim 5, wherein said tubular receptacle is a test tube (12).

7. Apparatus as claimed in claim 5 or 6, wherein said first supply conduit (18) forms means to direct said incoming gas in a helical path (30) at an angle of from about 15 to 30 angular degrees downwardly along said wall (28).

## Revendications

1. Procédé de récupération de solides dans un liquide en évaporant ledit liquide jusqu'à ce que lesdits solides se transforment en une composition solide présentant un état de siccité souhaité, caractérisé en ce qu'il comprend les étapes consistant à :
   a) placer une composition liquide (14), contenant lesdits solides et ledit liquide, dans un récipient tubulaire (12);

b) obliger un gaz de séchage à se diriger dans ledit récipient (12) par une conduite d'entrée (18) située à proximité du sommet dudit récipient tubulaire (12) et disposée de manière à diriger le flux dudit gaz de séchage selon une trajectoire hélicoïdale (30) le long de la paroi intérieure (28) dudit récipient (12) et en contact intime avec ladite solution contenue dans le récipient au fur et à mesure que le liquide est chassé de ladite solution ;

c) ensuite, évacuer ledit gaz de séchage par une autre conduite (20) disposée de façon à attirer ledit gaz vers le haut, à travers la partie centrale dudit récipient (12), empêchant ainsi la dilution dudit gaz sortant par ledit gaz entrant, de façon à maintenir une différence de température significative entre le gaz de séchage entrant et le gaz sortant pendant ledit procédé d'évaporation ;

d) détecter une variation du taux d'évaporation en contrôlant la température dudit procédé d'évaporation ; et

e) diminuer le flux de gaz de séchage en réponse audit changement de taux d'évaporation détecté, ce qui permet d'obtenir ledit solide à l'état recherché.

2. Procédé selon la revendication 1, caractérisé en ce qu'on détecte (60) la température dudit gaz de séchage au fur et à mesure qu'il est évacué dudit récipient, et cette température sert de critère pour déterminer ledit état recherché.

3. Procédé selon la revendication 1 ou 2, caractérisé est ce que ladite trajectoire hélicoïdale (30) est amorcée à un angle d'environ 10 à 50° vers le bas, par rapport au plan horizontal.

4. Procédé selon la revendication 1, 2 ou 3, caractérisé en ce qu'on détecte la température du produit en train de sécher en un point (72) situé à proximité dudit produit, et cette température sert de critère pour ledit état recherché.

5. Appareil pour isoler des solides d'un liquide, en évaporant ledit liquide, caractérisé en ce qu'il comprend :

a) un récipient tubulaire (12) présentant une fermeture (16) seulement au niveau d'une ouverture supérieure et formant un moyen pour maintenir une composition liquide (14) disposée de façon à être séchée jusqu'à un état sec adéquat à proximité du fond dudit récipient ;

b) une première conduite d'amenée (18) à travers ladite fermeture (16), située à proximité du sommet dudit récipient (12) et disposée pour acheminer le gaz de séchage dans ledit récipient (12) selon une trajectoire hélicoïdale (30) le long de la paroi intérieure (28) dudit récipient et en contact avec ladite composition (14) en train de sécher;

c) une deuxième conduite (20) située dans ladite fermeture (16) et disposée de façon à évacuer ledit gaz de séchage vers le haut, à travers la partie centrale dudit récipient (12) après que ledit gaz est venu en contact avec ladite composition en train de sécher ;

d) chacune desdites conduites (18 et 20) accédant audit ré-cipient (12) par ladite ouverture et lesdites conduites (18 et 20) formant ensemble un moyen servant à empêcher une dilution excessive du gaz entrant par le gaz sortant dudit récipient (12) ;

e) un circuit de commande formant un moyen pour détecter une température donnée dudit liquide s'évaporant ; et

f) un élément de circuit (82) pour réduire ou stopper le flux dudit gaz de séchage en réponse à ladite température donnée.

6. Appareil selon la revendication 5, caractérisé en ce que ledit récipient tubulaire est un tube à essais (12).

7. Appareil selon la revendication 5 ou 6, caractérisé en ce que ladite première conduite d'amenée (18) constitue un moyen servant à diriger ledit gaz entrant sur une trajectoire hélicoïdale (30) orientée selon un angle d'environ 15 à 30°, vers le bas, le long de ladite paroi (28).

**Patentansprüche**

1. Verfahren für die Rückgewinnung von Feststoffen aus einer Flüssigkeit durch Verdampfung der Flüssigkeit bis zur Umwandlung dieser Feststoffe in eine Feststoffzusammemsetzung eines gewünschten Trokkenheitsgrades, das Verfahren **gekennzeichnet** durch:

a) Einbringen einer die Feststoffe und die Flüssigkeit enthaltenden flüssigen Zusammensetzung in ein röhrenförmiges Behältnis (12);

b) Einleiten eines Trocknungs-Gasstromes in dieses Behältnis (12) mittels eines Einlaßkanals (18), der unmittelbar am Kopf des röhrenförmigen Behältnisses (12) einmündet, und so ausgerichtet ist, diesen Trocknungs-Gasstrom in einem schraubenförmigen Pfad (30) entlang der Innenwandung (28) dieses Behältnisses (12) und dadurch in engem Kontakt mit der darin erhaltenen Lösung zu lenken um so die Flüssigkeit aus dieser Lösung zu entfernen;

c) danach Entfernen des Trocknungs-Gases durch einen anderen Kanal (20) in Anordnung, dieses Gas nach oben durch den mittleren Bereich des Behältnisses (12) abzuziehen, unter Vermeidung einer Verdünnung des abziehenden Gases durch das einströmende Gas, um einen signifikanten Temperaturunterschied zwischen dem einströmenden Gas und dem ausströmenden Gas während des Verdampfungsverfahrens aufrecht zu erhalten;

d) Erfassung einer Änderung in Verdampfungs-Geschwindigkeit durch thermische Überwachung der Temperatur des Verdampfungsverfahrens; und -

e) Verringerung des Durchflusses des Trocknungs-Gases ansprechend auf die erfaßte Änderung in Verdampfungs-Geschwindigkeit, wodurch die Feststoffe in dem gewünschten Grad erzielt werden.

2. Verfahren nach Anspruch 1, **dadurch gekennzeichnet,** daß die Temperatur des Trocknungs-Gases an dem Punkt (60) erfaßt wird, an dem es aus dem Behältnis austritt, und dies als Kriterium zur Bestimmung des gewünschten Zustandes verwendet wird.

3. Verfahren nach Anspruch 1 oder 2, **dadurch gekennzeichnet,** daß der schraubenförmige Pfad in einem Winkel von ca. 10 bis 50 Grad von der Horizontalen nach unten führt.

4. Verfahren nach Anspruch 1, 2 oder 3, **dadurch gekennzeichnet,** daß die Temperatur des in der Trocknung befindlichen Materials in einer Position (72) unmittelbar nächst dem Material erfaßt und als ein Kriterium für den gewünschten Grad verwendet wird.

5. Einrichtung für die Trennung von Feststoffen von einer Flüssigkeit durch Verdampfung der Flüssigkeit, die Einrichtung **gekennzeichnet** durch:

a) ein rohrförmiges Behältnis (12) mit einem Verschluß (16) nur an der oberen Öffnung desselben, und mit einer Formgebung darin eine bis zu einem gewünschten Trockenheitsgrad zu trocknende flüssige Zusammensetzung (14) nächst dem Boden aufzunehmen;

b) einen ersten Zuführkanal (18) durch den Verschluß (16) und in einer Position nächst dem Kopf dieses Behältnisses (12) und angeordnet für die Zuführung Trocknungs-Gas in das Behältnis (12) in einem schraubenförmigen Pfad (30) entlang der Innenwandung (28) dieses Behältnisses und in den Kontakt mit dieser zu trocknenden Zusammensetzung (14);

c) ein zweiter Kanal (20) in diesem Verschluß (16) und angeordnet zum Entfernen dieses Trocknungs-Gases nach oben durch den mittleren Bereich des Behältnisses (12) nachdem das Gas die zu trocknende Zusetzung kontaktiert hat;

d) jeder dieser Kanäle (18 und 20) hat Zugang zum Bahältnis (12) an der Öffnung und diese Kanäle (18 und 20) zusammen bilden ein Mittel zur Vermeidung einer übermässigen Verdünnung des einströmenden Gases durch das aus dem Behältnis (12) ausströmende Gas;

e) einen Steuerstromkreis (80) als Mittel zur Erfassung einer Temperaturkondition der verdampften Flüssigkeit; und -

f) eine Schaltungs-Anordnung (82) zur Reduzierung oder Sperrung des Trocknungsgas-Durchflusses, ansprechend auf die Temperaturkondition.

6. Einrichtung nach Anspruch 5, **dadurch gekennzeichnet,** daß das rohrförmige Behältnis ein Reagensglas (12) ist.

7. Einrichtung nach Anspruch 5 oder 6, **dadurch gekennzeichnet,** daß der erste Zuführkanal (18) eine Anordnung zum Richten des einströmenden Gases nach unten in einen schraubenförmigen Pfad (30) in einem Winkel von ca.15 bis 50 Grad entlang der Wandung (28).

FIG. 1

FIG. 2

FIG. 4

FIG. 5

FIG. 3